# EUROPEAN PATENT APPLICATION

(11) **EP 4 506 098 A1**
(43) Date of publication of application: **12.02.2025**
(21) Application number: 23190876.5
(22) Date of filing: 10.08.2023
(51) Int. Cl.: B23K 26/082, B23K 26/08, B23K 26/282

(54) **METHOD AND SYSTEM FOR LASER PROCESSING OF ELONGATED THIN WORKPIECES USING DIRECT LASER WRITING**

(71) Applicant: Vilnius University, 01513 Vilnius (LT)
(72) Inventor: Paipulas, Domas, LT-08348 Vilnius (LT); Jukna, Vytautas, LT-10219 Vilnius (LT); Butkus, Simas, LT-06112 Vilnius (LT)
(74) Representative: Pakeniene, Ausra

(57) **Abstract**

A laser machining system comprises a laser generator (202) producing ultrafast laser pulses, a galvanometric scanner mirror (102, 204) for precision deflection of the laser beam (101), and a main unit (100) comprising a folded optical system with focusing optics (207, 210, 212, 214) capable of delivering the laser beam focused waist onto the surface of a elongated thin workpiece (103), for example, cylindrically-shaped, or having quadrilateral or mullitlateral or elliptic perpendicular cross-section. The main unit (100) is attached directly to the scanning mirror subsystem (102) and they both comprise the optical path, which is separated into several, e.g., four, equal paths terminating on the workpiece (103) surface from orthogonal directions covering the workpiece from opposite sides. The optical path in the main unit (100) is arranged in such a way that the paraxial optical mode remains valid at all reflecting mirrors, mitigating the optical aberrations of the focused beam onto the surface of the workpiece (103). With controlled deflection of the scanner mirror (204), the laser beam can access the full area of the outer surface of the workpiece (103) and process the workpiece (103) using controlled laser ablation or surface treatment using direct laser writing (DLW). The workpiece (103) is mounted into a translation stage perpendicularly to the laser beam, allowing free-form laser processing onto a cylindrically- or multilaterally-round elongated shape, by synchronized deflection (204) of the laser beam, and longitudinal translation of the workpiece (103) by the translation stage.

## Description

### FIELD OF INVENTION

The present invention relates to laser processing technology, specifically to a method of laser energy delivery on elongated thin workpieces (for example, cylindrically-shaped, or having quadrilateral or mullitlateral perpendicular cross-section) with diameters, preferably, less than 2 mm, that can be applicable including but not limited to precision-laser-cutting, laser stripping, selective surface micro/nanopatterning, stent fabrication, thinning of dielectric and metallic materials by the means of direct laser writing techniques.

### BACKGROUND ART

Ultrafast laser micromachining is a precision manufacturing technique that utilizes high-intensity, ultrashort laser pulses to create intricate features and patterns on various materials at a microscopic scale. The process involves focusing the ultrafast laser beam onto the target material while the high peak power of the laser pulses removes material through a combination of mechanisms, including ablation, material modification, melting, and vaporization. Applying automated sample positioning, beam scanning, and laser synchronization, patterns of any complexity can be realized in theory by the direct laser writing (DLW) method, which is well documented in the scientific literature (i.e. Sugioka et al. 2004, doi:10.1038/lsa.2014.30). In this context, DLW means the workpiece surface processing method where each surface region can be directly accessed by focused laser radiation, meaning that each workpiece surface region has unique sets of coordinates and the laser radiation is initiated only at particular coordinates that can be dynamically changed by the operator, producing discrete or continuous free-form shapes that were laser irradiated. The desired outcome of DLW applications depends on the suitable choice of fabrication parameters, which include but are not limited to radiation parameters, focusing conditions, and recording and patterning algorithms, which in general are material-sensitive and can be experimentally evaluated or estimated from scientific literature by the person skilled in this art.

For the implementation of the DLW technique, micro-positioning and controlled tracking of laser spot size relative to the workpiece surface are required. In the most straightforward embodiment, as described in US patent US6423929B1, a laser machining system implements synchronized beam scanning with linear sample translation that can cover large workpiece areas for DLW tasks. However, such a design is suited only for flat workpieces, while shapes with higher surface complexity will require more sophisticated beam focus positioning.

DLW on cylindrical-shaped workpieces is an important fabrication tool for R&D and industry. The ability to perform DLW in a continuous process across all workpiece surface, in which the workpiece is continuously passed through a laser processing device while DLW operation is carried out with laser radiation at the respective intended locations, is highly valuable. A challenge for this type of processing is the requirement that the sample be processed on all sides and evenly. A similar problem often arises with laser welding of cylindrical workpieces, soldering, and wire stripping operations.

Based on chosen laser focusing tactics three processing strategies can be generalized for cylindrical shape laser microprocessing: (I) laser turning based solutions with rotative workpiece, (II) rotating/flying optics designs, (III) multibeam processing. For laser turning applications the apparatus setup resembles a mechanical turning lathe, but instead of a chisel, a focused ultrashort pulsed laser beam is used. The laser beam is positioned perpendicular to the rotational axis and guided along the workpiece to create rotationally symmetric parts. As example in patent documents US8383981B2, US2005/0058947A1, the apparatuses are presented where the complete area of cylindrical workpiece is accessible for laser processing by the means of controlled sample rotation. These techniques are not applicable to cylindrical workpieces that have low mechanical rigidity and could not sustain torsion deformations. In that case a workpiece must be fixed to a machining stage where only translation operation is allowed. To access the full workplace area optical system itself can rotate around performing DLW. The apparatus disclosed in patent documents WO2008/084216A1 and US2007/0151959A1 operates using this principle with varying degrees of the complexity of optical system. Such configurations suffer from the relatively low processing speed and positioning accuracy are limited due to modest mechanical stability of nonstationary optical components. Shifting optical elements can be eliminated with a multibeam processing approach where several laser beams simultaneously or in the sequency process different sides of the workpiece. This requires a specialized optical system design capable of delivery laser radiation at designated surface locations. In earlier works the idea of using four perpendicular laser beams locked on the workpiece surface from four different sizes was proposed. In US patent US 4,671,848 this idea was disclosed first with embodiment without beam scanning capability, while FR2690015 patent introduces embodiments with beam scanning options in symmetrical optical configuration where all four arms have identical optical design, including the laser sources, or embodiments that at least have symmetrical focusing units each with separate scanning components, which makes optical system highly complex and hard to maintain.

In more recent works multibeam or sequential beam processing for cylindrical surfaces has been more refined to reduce the complexity and tailor it to specific processing applications.

The international patent application WO2020/098868A1 discloses an apparatus for laser cutting of shielding conductors that utilizes sequential multibeam focusing realized using a single deflecting mirror. A symmetrical optical configuration with up to 8 beam paths is chosen where focused laser radiation terminates perpendicularly on the cylindrical workpiece. The symmetry is maintained by propagating the laser beam along the workpiece with the scanning axis coinciding with the workpiece axis, while only the final mirrors fold the beam perpendicularly to the surface. A drawback of prior art is that long cylindrical objects cannot be processed with this apparatus because eventually the laser beam will be obstructed by the workpiece's presence. Additionally, right-angle mirrors acting on the converging laser introduce a high level of astigmatism, reducing the size of the focal spot on the surface.

In the patent application EP3603872A1, an apparatus is disclosed where several fixed mirrors are arranged in such a configuration that a laser beam, focused with a single f-theta objective, can be redistributed and redirected on all cylindrical workpiece sides utilizing only one scanning element. The disadvantage of this solution is that folding mirrors, which vary in number for separate processing arms, are installed in a converging beam path, inducing astigmatism aberration on the image plane, which prevents diffractive-limited focusing and reduces processing resolution. Additionally, the presence of transparent optics in systems prevents the use of such apparatus in deep ultraviolet wavelength applications.

### SUMMARY OF INVENTION

**Objectives.** Starting from the prior art mentioned, the present invention is therefore based on the object of developing the machining device in such a way that the disadvantages described above can be avoided. Particularly, with the provided method, it should be possible to process a workpiece uniformly on all sides using a minimum number of laser beam scanning devices without the need to rotate the workpiece or use rotating optics optomechanical components. In addition, a focal spot size at all processing phases should be diffraction-limited, which will improve the processing resolution of the laser machining task. In addition, the DLW parameters can be set independently on the processing side. Furthermore, in addition to machining rotationally symmetrical workpieces, the invention can also be used to machine profiled and/or asymmetrical workpieces.

**Solution.** The objective of the invention is achieved by the optomechanical system that includes a series of mirrors and focusing optics arranged in a symmetrical paraxial optical configuration that can redirect and focus a laser beam on four opposite sides in an orthogonal configuration on a cylindrical workpiece surface with diffraction-limited resolution, which is the first aspect of the invention.

Additionally, a method of machining elongated thin workpieces (for example, thin cylindrical, or having quadrangular, or multiangular crossection) with DLW using a single laser scanner is disclosed, which is a second aspect of the invention.

The basic feature of the present invention is that a laser beam generated, preferably but not limited to, from an ultrashort laser pulse generator that has automated internal or external power attenuation and shutter, is directed through optional beam conditioning optical devices, preferably the optical telescope, to a computer-controlled optical scanner, which deflects the laser beam at predefined angles to the designated optical subsystems, each one consisting of several mirrors and one final focusing element, arranged in such a way that the laser beam enters the focusing element at low angles complying with the paraxial optics requirement and terminates at the target, which is a focus position. In this embodiment, four optical subsystems in orthogonal configurations are used, but their number is not limited. All focusing points should preferably converge on a single point, which is the cylindrical axis of the workpiece. Each optical subsystem is accessible separately by setting a different scanning angle, while continuous scanning across the workpiece is realized in each optical subsystem independently by setting the scanner wobbling amplitude. The working field of the subsystem depends on the focusing optics parameters and the distance from the scanner mirror to the focusing element and is limited by the paraxial condition requirement. While this requirement is satisfied, focusing optics have aberration-free imaging, and f-theta configuration is satisfied by definition, avoiding the need for complex focusing optical systems.

The orthogonal beam intersection at the workpiece allows the processing of only a quarter of the workpiece with a single optical subsystem, while the field of view equals half the workpiece, which allows the smooth overlap of focal positions across all sides. Operator could choose either to work at normal laser incident configuration, which means that the laser beam hits the workpiece at perpendicular orientation, producing the smallest focus size preferable for precision micropatterning or cutting, or operate at tangential orientation, where the beam focus barely skips the edge of the workpiece, better suited for polishing and thinning applications.

The optical path in each subsystem has mirror-like symmetry and has identical optical path length, which allows integration of additional beam conditioning optical elements before the scanner devices. Beam-shaping optical devices such as a cylindrical telescope that converts a Gaussian beam spot to a cylindrical-shaped focal spot, a collimated axicon for Gaussian-Bessel beam profile generation that helps to extend focusing depth, or similar devices can be readily integrated by a person skilled in this art.

In cases where the DLW process is required for continuous or intermittent processing of workpieces, the workpiece is translated through processing equipment, specifically through the processing area, while the DLW is in operation. In this implementation, the feed rate, laser generation, and scanner position are synchronized using a computer. Depending on the required operation, the translation rate can be either constant or variable. In the latter case, the feed rate changes during the machining process of the workpiece. For workpieces that are structurally strong and can sustain torsion deformations, a rotational operation can be used together with translation to increase speed and DLW precision.

In addition, the invention is not limited to a particular DLW method but may involve any type of surface treatment, including stripping, thinning, annealing, welding, selective cutting, marking, or cleaning, among others.

The invention is explained in more detail below with reference to an exemplary embodiment shown in the drawings.

### DESCRIPTION OF DRAWINGS

The drawings are provided as a reference to possible embodiments but are not intended to limit the scope of the invention. The drawings and the graphs presented herein should not be considered as limiting the scope of the invention, but merely as an example of a possible embodiment of the invention.
- **Fig. 1**: depicts principal view of an apparatus for laser processing of an elongated cylindrical (or having multilateral/multianguar, or elliptic, or oval cross-section)-shaped workpiece 103 installed on a galvanometric scanner.
- **Fig. 2a**: schematical representation of an embodiment with the main unit incorporating all-mirror solution at paraxial configuration.
- **Fig. 2b**: schematical representation of the main unit where each optical subsystem is indicated separately.
- **Fig. 3**: depicts the cross-section of workpiece with possible arrangements for smooth laser surface treatment.
- **Fig. 4**: depicts a beam conditioning stage for beam splitting operation to increase the processing throughput for main unit.
- **Fig. 5**: the spot diagrams at target areas for each individual main unit arm (top row); target footprint for 1.4 mm scanning shift with corresponding spot diagrams at the edges (B and C) and the center (A) (middle row ); Gaussian beam distributions at positions A-C on the workplace.
- **Fig. 6**: the embodiment utilizing free form surface processing employing two-axis scanning mirror.
- **Fig. 7**: the principal view of embodiment with three main units installed on the single two-mirror scanner head.

### DETAILED DESCRIPTION OF INVENTION EMBODIMENTS

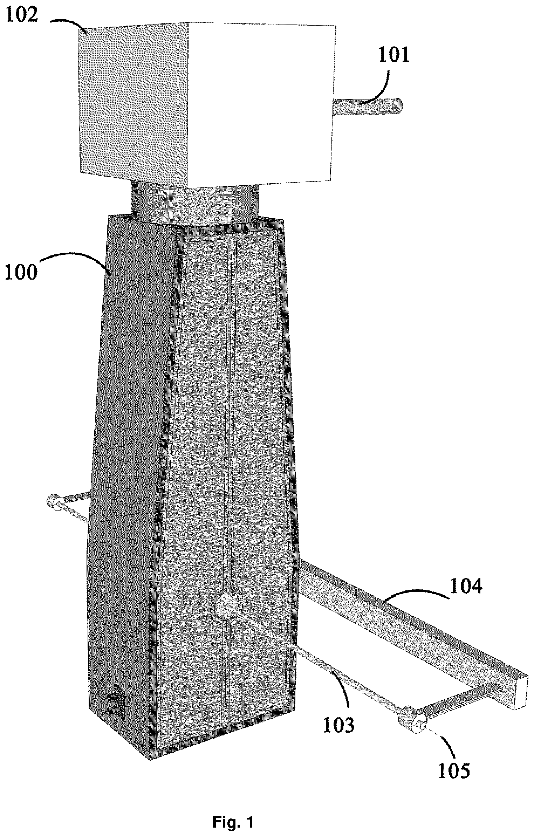

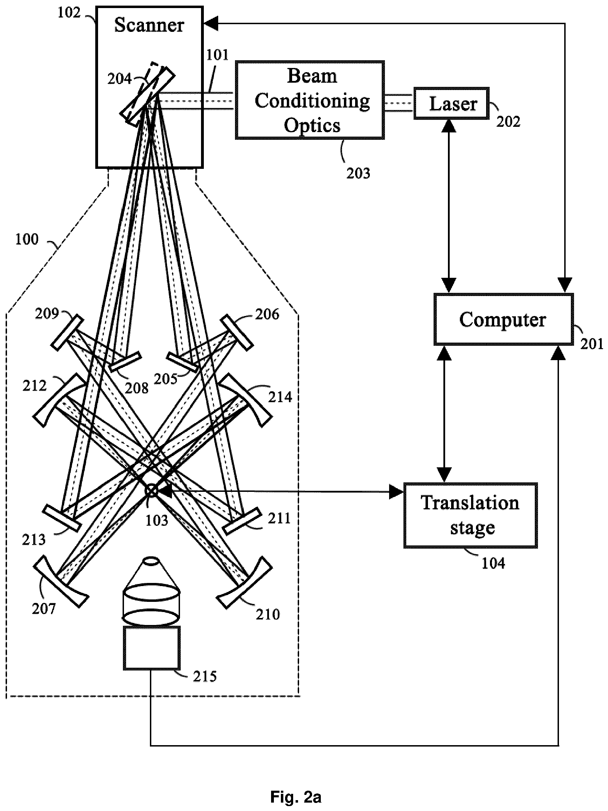

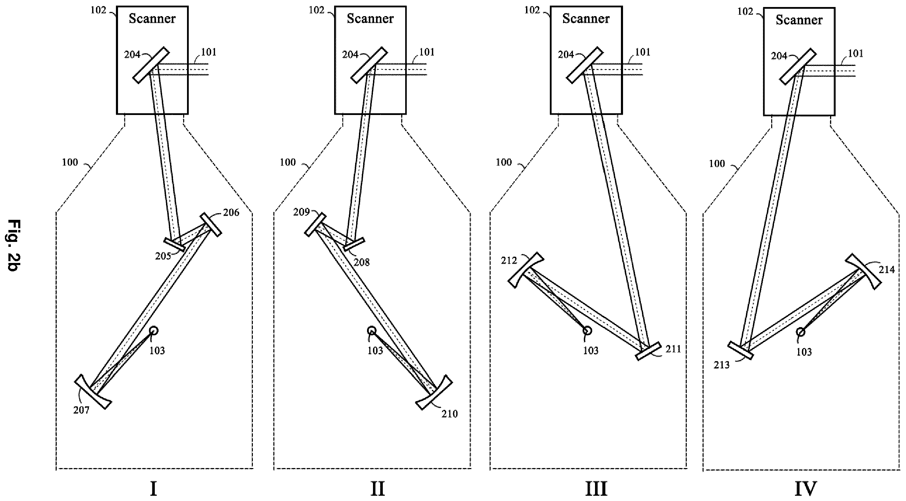

According to Figures 1,2a and 2b, an apparatus for the laser processing of elongated thin, for example, cylindrically-shaped or having quadrilateral or mullitlateral or elliptic perpendicular cross-section, workpieces comprises the main unit 100, which is attached to a scanner device 102 that deflects the laser beam 101 according to the chosen processing protocol. The scanner device 102 comprises single or double mirror components, termed the "scanner head" (204), which accepts computer-controlled commands and deflects the mirror at angles corresponding to these commands, deflecting the incoming laser beam. The operation principle of the scanner head is known to a person skilled in the art and will not be discussed in detail at this point. The scanner head 204 deflects the laser beam at a predefined angle, which enters the main unit and, more specifically, one of the several optical subsystems present in the main unit, which are indicated in Figure 2a. In this particular embodiment, four subsystems are shown. These subsystems comprise several folded mirrors: subsystem (I) includes flat mirrors 205, 206 and spherical mirror 207, subsystem (II) includes flat mirrors 208, 209 and spherical mirror 210, subsystem (III) includes flat mirror 211 and spherical mirror 212, and subsystem (IV) includes flat mirror 213 and spherical mirror 214 as depicted in Figure 2b. All the spherical mirrors have identical surface curvature and are in symmetric arrangement at opposite sides of the workpiece 103, producing the beam waist directly on the workpiece 103 in the orthogonal configuration. By setting four different deflection angles on the scanner head 204, the laser beam will enter each subsystem in such a way that it will be centered on the spherical mirror (207, 210, 212, 214). Moreover, the arrangement of the flat mirror prior to the spherical mirror is such that the incident angle of the directed laser beam on the spherical mirror remains small. Specifically, each of the spherical mirrors (207, 210, 212, 214) is paired with a flat auxiliary mirror (206, 209, 211, 213) that corrects the incident angle on the spherical mirror to produce close-to-normal reflection, which capacitates the paraxial propagation regime, mitigating optical aberrations of the laser beam. The minimum incident angle is limited by the diameter of the used mirrors and mirror holder dimensions, the focal distance, and the workpiece size. It is clear that the optical system can be rearranged by shifting auxiliary mirror positions in such a way that optical paths in all subsystems are equidistant with identical incident angles on focusing mirrors. In this configuration, each subsystem will have identical optical performance with the minimum amount of optical aberration, implying that a collimated laser beam enters the scanner.

Moreover, while centered at a specific deflection angle corresponding to the optical center of the spherical mirror for a particular subsystem, the scanner can be programmed to additionally deflect the laser beam in the subsystem according to a predefined algorithm, which will result in the shifting of the focal spot position with respect to the workpiece surface, facilitating DLW operation. The movement of the focal position is mainly caused by the change in incidence angle on the spherical mirror, which linearly correlates with scanner angle, facilitating the f-theta working condition. This means that a linear change in scanner angle produces a proportional shift in focal position on the workpiece, which allows direct application of the DLW process without elaborate calibration. On the other hand, the minor change in scanner angle will shift the laser beam off-center on the spherical mirror, which will cause additional aberrations to appear. However, these aberrations can be neglected if the incident angle remains small and obeys the paraxial beam propagation regime. For example, in spherical mirrors with a focus length of > 100 mm this condition will be satisfied for focal shift movement in a range of 2 mm on the workpiece surface, defining the aberration-free working field of a single subsystem. Combining all subsystems, the working field will cover a full cylindrical workpiece with a 2 mm cross section.

The workpiece 103 to be processed is not a part of the main unit and is attached with external holders from both sides to the automatized translation stage 104. The external holders can be adjusted in such a way that the workpiece 103 axis will coincide with the common focal axis of the main unit 105, while the beam propagation direction in the main unit 100 will be perpendicular to the workpiece 103 axis. In this way, the workpiece 103 can be fed into the apparatus to provide continuous DLW processing. The direction of the feed, feed speed, and feed type, i.e. continuous movement or movement in discrete steps, can be programmed by a translation stage, known by the person skilled in the art.

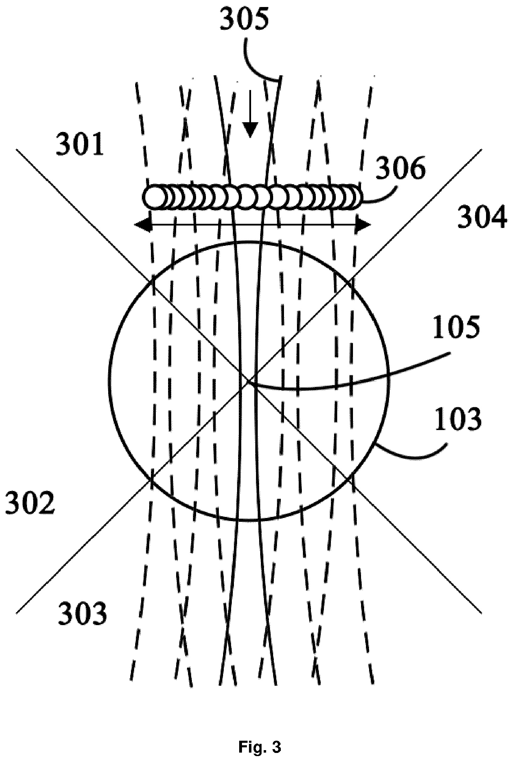

The confocal parameter of the focused laser beam for >100 mm focal length mirror will be comparable to the workpiece diameter, therefore, it is preferable to align all subsystems at one central point 105, termed the main unit 100 axis where workpiece 103 is located. Figure 3 shows the target location where regions 301, 302, 303 and 304 depict the regions accessible with separate subsystem. For the 301 region, a possible scanning trajectory for line processing using DLW is depicted. An original laser focus 305 is located directly at the workpiece center, which corresponds to on-axis position of particular spherical mirror. When the beam is deflected within the subsystem, the beam travels across the center of the workpiece, tracing line 306 on the workpiece surface facilitating DLW operation. A particular advantage of such embodiment is that the focal positions for all subsystems are permanently fixed at single point at the initial assembly stage and do not need further adjustments. The tradeoff of such configuration is that, due to the sample curvature, the central beam and shifted beam hit the target at different angles, meaning that complete beam uniformity on the surface cannot be achieved. However, this tradeoff can be compensated by varying beam density across the scanning direction. It is understandable, that for complete processing of the full cylindrical surface, this operation must be performed with all subsystems.

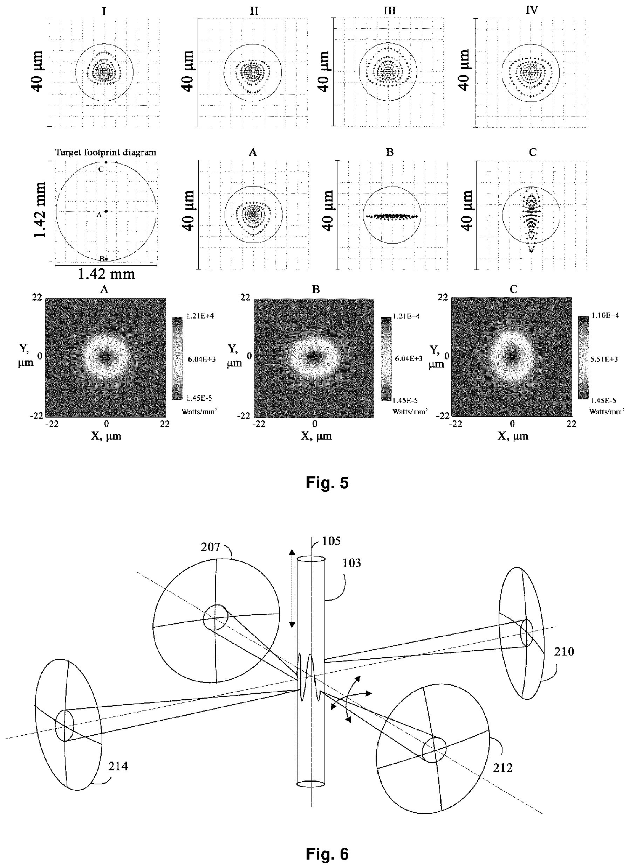

Figure 5 presents the estimated aberrations for separate subsystems and scanning positions in each subsystem. For a single spherical mirror operating in paraxial regime only third order point-spread-function aberrations must be considered, these include spherical, coma, and astigmatism. The image blur due to spherical aberration can be computed using formula β_{SFA}= 0.0078/(*f*/*#*))³, where β_{SFA} is the blur angle (in rad) measured from exit pupil, which in this case coincides with the focusing mirror. Respectively coma's contribution is β_{COMA}= *u*ₚ/[16(*f*/*#*))²] and astigmatism's β_{ASST}= *u*ₚ²/[2(*f*/*#*))]. Here the f/# is defined as the ratio of lens focal length to aperture, which for typical 100 mm focal length mirror in our main unit is a high value (> 20), while *u*ₚ is the incidence angle. For comparison the diffraction-limited blur is β = 1.22λ *f*/#. It is evident that astigmatism is the dominating aberration in optical systems with tilted spherical mirror, and its contribution could be reduced by up to two orders of magnitude if incidence angle correction is carried out as presented in this embodiment. Computed spot diagrams for separate subsystems and scanning positions in subsystem are shown in Figure 5. Top row indicates the spot diagrams for each subsystem with 3 mm entrance aperture value at centered beam positions. The 257 nm wavelength was used for computation. The Airy disc showing the diffraction-limited region is indicated as the circle and has a 21 µm diameter. For all configurations a diffraction limited performance is achieved for embodiment depicted in Figure 2. The spot patterns are reversed in II and IV subsystems due to inversion of incidence angle, also the subsystems III and IV show slightly larger aberrations. This is because incidence angles were set to be slightly bigger for these subsystems than I and II. This can be corrected if needed by shifting mirrors 211 and 213 closer to the corresponding mirrors 207 and 210. The middle part of Figure 5 shows the spot diagrams when sample scans across the subsystem. The left diagram shows the footprint on 1.4 mm size target while laser is focused on the sample center A and edges B, C. Corresponding spot diagrams are shown on the right. When the scanning takes place the development of astigmatism is clearly seen in the diagrams however its magnitude is still comparable to Airy disc and do not disturb the beam distributions. The former fact can be assured by the bottom row of Figure 5 where the Gaussian beam distribution is modeled at A,B,C locations, showing that peak intensity in all three locations matches with 90 % precision.

In the preferred embodiment, the DLW is performed on the workpiece 103 by the following steps. A computer 201 is used to prepare required DLW algorithm which includes the set of coordinates and timing commands in predefine sequence and sends these commands to laser generator 202 for setting laser generation parameters such as starting or stopping of generation, changing laser power or any other parameter that can be changed by externally controlled signal, and positioning devices, which are scanner head 102 and translation stage 104. As it is clear for person skilled in this art that main unit construction and scanning head will capacitate such electromagnetic radiation that matches mirror reflective coatings, therefore laser radiation with wavelengths from far IR, generated i.e. from CO2 lasers, up to excimer laser operating at deep UV wavelengths can be used. Deep UV wavelength at 257 nm, was chosen as preferred source for this embodiment. Also, different laser operating regimes, such as continuous wave, pulsed lasers, or burst laser can be used as the light sources for the apparatus. Depending on the operation regime and type of the laser, controlling commands can differ. In predefined embodiment, DLW with ultrafast laser sources are preferred therefore laser generator will be able to generate ultrashort laser pulses at particular instance indicated by computer control command with additional parameters such as the number of pulses, pulse duration, the pulse energy, or any additional parameter required for particular DLW operation. Moreover, the emitted laser pulses can be additionally modified with optional beam conditioning optics module 203 before entering the scanner and main unit. The positioning commands control the scanner deflection angle, which direct laser beam to particular working field position across the workpiece while translation commands feed the workpiece into the working field of the apparatus. In such configuration each location on cylindrical workpiece can be located in translation stage traveling range. Moreover, skilled operator can employ automatic workpiece holders 104, i.e. electromagnetic clamps, that are released when translation stage reaches its limits, then the workpiece is pulled by predefined amount with some external apparatus, i.e. flexible workpiece can be rotated on the bin that holds processed workpiece, enabling of processing workpieces with unlimited length. Feedback signals from the scanner and translation stages that encode present coordinates, and the state of the devices can be utilized for optimization DLW algorithm by skilled operator. In other embodiment workpiece positioning can also include other degrees of freedom, i.e. the workpiece rotation along its axis and angular coordinates can be additional positioning variables for DLW applications.

Additionally, a machine vision camera with microscope objective 215 can be installed for process monitoring tasks in real time at the opposite-from-scanner side where free-of-beam zone are located which will cover the half size of the processing zone. Other identical camera can be installed on opposite site at the slight angle to workpiece in-order not to obstruct the laser beam, that will cover the other half of the workpiece (not shown in Figure 2). As the beam propagates almost entirely in one plane in the main unit, it is straightforward to install additional cameras if necessary close to workpieces at the slightly tilted planes in embodiments where detailed visual process control is needed.

For example, if the DLW process requires creation of micropattern consisting of equally spaced microwells on cylindrical surface where each microwell is realized by perforated laser drilling with ten consequent laser pulses, DLW algorithm may look as fallows: (I) deflect the scanner to the edge of first subsystem (corresponding to the far left edge of region 301) and generat ten laser pulses on the designated spot, (II) shift the scanner by specific angle (typical in range 10 µrad), and repeat the laser writing, (III) repeat the same procedure again until the right edge of region 301 is reached; (IV) then scanner is deflected to other closest subsystem (typical in range 30 - 100 mrad) and the algorithm in steps I-III is repeated; (V) the DLW for remaining two subsystems is repeated in the same fashion, (VI) the translation stage moves sample by designated distance and process is repeated until algorithm ends. This is a most straightforward algorithm that could be used as blueprint for other DLW development. However, it is not optimal in the processing speed sense other solutions are possible and will be mentioned.

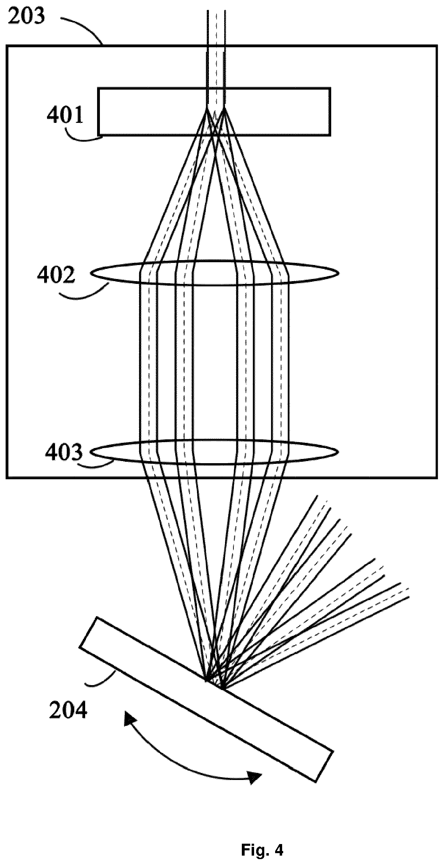

In particular embodiment where symmetrical DLW is required the scanner shifting between the subsystems can be entirely eliminated with multibeam accessory 203 shown in Figure 4. Here, diffractive optics element (DOE) 401, designed for splitting of laser beam into four equal parts each propagating at specific angles, is installed in the laser beam path. Such elements are commercially available and can be ordered with parameters suitable for particular laser wavelength and separation angle. After DOE, the 4f imaging system is installed with telescope consisting of lenses 402 and 403 that images DOE on the scanner head 204. In result the four laser beams at symmetrical angles will exit the scanner where each of the beam can be arranged to be the center of the subsystem. The scanning for a single subsystem will result in scanning in all four subsystems simultaneously increasing processing speed.

In the embodiment with a single mirror scanning head only one scanning direction X which is set as perpendicular to workpiece can be used. In the embodiment with double mirror scanning head the Y direction which is set as parallel to workpiece can be utilized. For Y axis aberration considerations are identical as for X axis, meaning that single subsystem will have 2 mm x 2 mm working field, that can be efficiently applied to increase DLW throughput. The presence of Y axis can be incorporated in the algorithm as additional coordinate for DLW increasing the feeding rate of translation stage as shown in Figure 6.

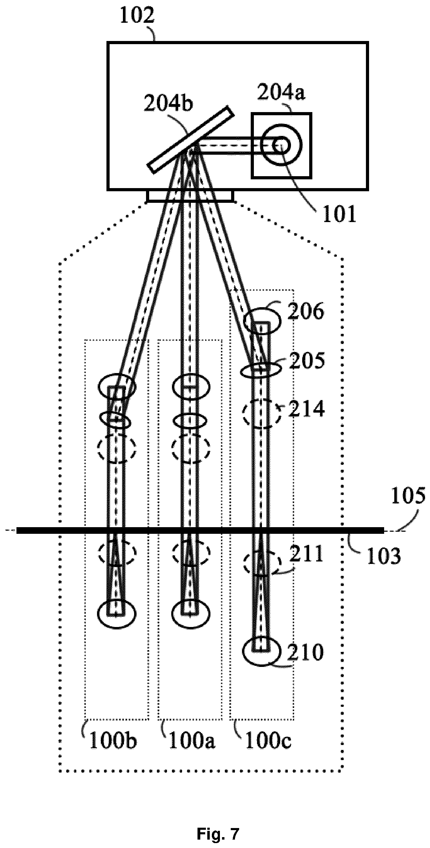

In addition, for double axis scanning head embodiment additional main unit or units can be installed along the workpiece, where each subsystems are accessed by particular X and Y deflection angle combination as shown in Figure 7. Scanner mirror 204a deflects the laser beam in X direction accessing subsystem within the main unit while mirror 204b deflects the beam along the workpiece to the additional units. Additional units may have identical optical subsystems 100b as the prime main unit 100a or may have different layout in example with spherical mirrors having different focal lengths 100c, producing bigger focused beam spot. The additional units and subsystem within them can be accessed by DLW algorithm providing the scanner position commands.

## Claims

1. A laser machining system for direct laser writing on an elongated thin workpiece (103), comprising:
• at least one laser radiation generating device (202) producing single or multiple laser pulses with energy required for the workpiece (103) processing;
• a designated holder (104) for holding the workpiece (103) and capable of translating the workpiece (103) relative to the laser beam within the processing area (100);
• an optical system (203, 102, 205-214) for delivering and focusing the laser beam onto the outer surface of the workpiece (103) from multiple sides;
• a controlling computer (201);
wherein the optical system comprises a computer-controlled mirror scanner (102) comprising a single or double mirror (204), deflecting the laser beam (101) into one or more optical sub-systems (205-207, 208-210, 211-212, 213-214), each optical sub-system accessed by a particular angle of the scanner (102) mirror (204), and arranged in such a way that the laser beam is delivered and focused onto the workpiece (103) surface from a designated side thereof, as designated by the particular optical sub-system, whereby the scanning mirror (204) directs the laser beam within the particular optical sub-system thus producing a focused beam trail on the workpiece (103) surface from said designated side thereof,
**wherein** the machining system, in each of said optical sub-systems, comprises at least one flat mirror (205, 206, 208, 209, 211, 213) and a spherical mirror (207, 210, 212, 214) focusing the laser beam onto the designated side of the workpiece (103), said mirrors in each optical sub-system are arranged in a configuration where the spherical mirror is paired with the at least one flat mirror (205, 206, 208, 209, 211, 213) to reduce the laser beam incident angle onto the spherical mirror (207, 210, 212, 214) where paraxial optics approximation remains valid during processing, thereby producing a diffraction-limited focal spot (306) across the working field (301, 302, 303, 304) defined by the workpiece size and/or latteral projection thereof, thereby covering outer surfaces of theworkpiece (103).

2. The system according to claim 1, **wherein** the laser beam paths between the scanner mirror (204) and the target focal spot (306) on the workpiece (103) is configured of the same length through more than one all optical sub-systems, and for the same amount of aberrations in said focal spot (306).

3. The system according to claims 1 to 2, **wherein** more than one all optical sub-systems have the common focal point at the longitudinal axis of the workpiece (105).

4. The system according to any one of claims 1 to 3, **wherein** the system comprises four optical sub-systems for irradiating the workpiece (103) by the focused laser beam from four orthogonal directions.

5. The system according to any one of claims 1 to 4, **wherein** the system is configured for direct laser writing (DLW) application, wherein the DLW resolution is determined by the focused beam size and laser radiation parameters, and each location on the workpiece's (103) cross-sectional surface can be accessed by the particular combination of the mirror scanner (102) and translation stage (104) coordinates.

6. The system according to any one of claims 1 to 5, **wherein** the system further comprises one or more cameras with microscope objective lenses (215) arranged around the workpiece (103) perimeter for real-time monitoring of the DLW processing.

7. The system according to any one of claims 1 to 6, **wherein** the designated holder (104) is a rotational holder that can rotate the held workpiece (103) around the longitudinal axis (105), thereby providing additional angular positioning coordinates for translating the workpiece (103) during the DLW process.

8. The system according to one of claims 1 to 7, **wherein** the laser beam before the scanner (102) mirror (204) input is split into a number of beams, wherein said number of beams is identical to the number of the optical sub-systems, with equally divided power using a diffractive optics element (401), and said number of beams is imaged on the scanner (102) mirror (204) with an imaging telescope (402, 403) producing the number of diverging beams each diverging beam having a unique deflecting angle centered on the optical sub-system's optical axis, thereby providing simultaneous processing of the workpiece (103) throughthe number of the optical sub-systems.

9. The system according to any one of claims 1 to 8, **wherein** the system comprises more than one main unit with optical sub-systems, and/or sets thereof (100a, 100b, 1 00c) arranged to redirect and focus the laser beam (204a) onto the workpiece (103) surface from all sides,
wherein said more than one optical sub-systems and/or sets thereof are arranged along the longitudinal axis of the workpiece (105) and any one or a combination of said optical sub-systems and/or sets thereof (100a, 100b, 100c) can be operated by the scanner (102) mirror (204b) with a particular set of the laser beam (204a) deflection angle coordinates, to perform the DLW operation to the workpiece (103) from said any one or the combination thereof.

10. The system according to any one of claims 1 to 9, wherein the processed elongated thin workpiece in the cross-section has the diameter 2 mm or less, and its cross-section perimeter line is circular, oval, elliptic, quadriangular/quadrilateral, or multiangular/multilateral.

11. A method for machining an elongated thin workpiece using DLW, the workpiece (103) being received and positioned by a translation stage (104) in a laser processing zone (100), the method comprising at least steps of:
**a)** generating at least one laser beam by at least one laser pulse generating device (101);
**b)** deflecting by a scanner mirror (204) the laser beam to an optical sub-system comprising at least one flat mirror (205, 206) and a focusing mirror (207) in such a way that incident angle of the laser beam on the focusing mirror (207) is such small to comply with paraxial propagation approximation mitigating optical aberrations and produce diffraction-free focusing spot (306) onto the workpiece (103) surface;
**c)** the step **b)** is repeated for more than one optical sub-systems arranged around the workpiece (103) in such configuration that the outer surface of the workpiece (103) is processed with aberration-free focused laser beam (306), deflected by the scanner mirror (204) through said more than one optical sub-systems,
**d)** the steps **b)** and/or **c)** are repeated whereby translating the workpiece (103) inside the laser processing zone (100) to expose an unprocessed surface of the workpiece (103) to the focused laser beam (306) deflected by the scanner mirror (204) through any one of said optical sub-systems.

12. The method according to claim 11, **wherein** the laser beam paths between the scanner (102) mirror (204) and the target focal spot (306) on the workpiece (103) is configured of the same length through any said optical sub-system, and for the same amount of aberrations in said focal spot (306).

13. The method according to claim 10 or 11, **wherein** the workpiece (103) is processed sequentially by the DLW configuration wherein each region of the workpiece (103) is processed individually by a single focused spot (306) of the laser beam, whereby each such region is accessed usinga particular combination of the scanner mirror (204) deflection and translation stage (104) coordinates.

14. The method according to any one of claims 11 to 13, **wherein** the workpiece (103) is processed using the laser machining system according to any one of claims from 1 to 9.

15. The method according to any one of claims 10 to 14, wherein the processed elongated thin workpiece (103) in the cross-section has the diameter 2 mm or less, and its cross-section perimeter line is circular, oval, elliptic, quadriangular/quadrilateral, or multiangular/multilateral.
